# EUROPEAN PATENT APPLICATION

(11) **EP 1 563 744 A1**
(43) Date of publication of application: **17.08.2005**
(21) Application number: 04017940.0
(22) Date of filing: 29.07.2004
(51) Int. Cl.: A23L 1/39, A23L 1/40, A23L 1/09

(54) **Native starch-based thickened food composition**

(30) Priority: 13.02.2004 IT MI20040246
(71) Applicant: BARILLA G. E R. FRATELLI S.p.A., 43100 Parma (IT)
(72) Inventor: Cavalieri, Barbara, 43030 Basilicanova (Parma) (IT); Cademartiri, Enrico, 26100 Cremona (IT); Dameno, Franco, 29100 Piacenza (IT)
(74) Representative: Ferreccio, Rinaldo

(57) **Abstract**

A native starch-based thickened food composition suitable to be used as a base for the preparation of sauces, containing, in percentage weight over the weight of the composition, 0 to 7% maltodextrins, 0 to 3% one or more dietary fibers, at least 4% edible fats and at least 0.5% milk proteins, the overall percentage content of maltodextrins and dietary fibers being at least 1%, is described; a process for the preparation of such a composition is also described.

## Description

### Field of application

The present invention, in general, refers to the technical field of the food industry. In particular, the invention concerns a starch-based thickened food composition that can be used as a base for preparing sauces.

### Prior art

Thickened food compositions of the béchamel type have long been available on the market, both for retail and for use in food industries and laboratories for the preparation of ready-to-use "white" sauces, i.e. without tomato, for example mushroom, cheese, truffle, salmon sauces, etc.

These are long-life sterilized or pasteurized food preparations, which must maintain their textural, rheological and organoleptic properties over time.

Fundamental components of such preparations are chemically modified starches, which have the ability to successfully withstand the extreme conditions encountered during processing (high temperatures, intense shear stresses) and to remain stable over long shelf-lives, even following drastic sudden changes in temperature (e.g. heating after a period of keeping at a low temperature). A native starch-based composition would not have such resistance and stability characteristics.

Chemically modified starches, however, exhibit various drawbacks. First of all, they are perceived by consumers as chemical, or in any case artificial, additives and also they lead to the production of sauces that are not as smooth and creamy as the home-made ones.

Generally, the above mentioned thickened food compositions contain other ingredients, in addition to modified starches, which, although permitted under current regulations, are nevertheless non-natural ingredients. They are, in particular, xanthans and mono- and diglycerides of edible fatty acids. The former are used for their thickening properties and the latter for their emulsifying activity.

These ingredients, also, give the final sauces an artificial base note, which in some cases compromises the overall organoleptic properties of the sauce.

Therefore, there is the need to provide thickened food compositions that can be used as bases for sauces, and which are free of "artificial" ingredients, like those mentioned above.

A partial answer to such a need has been provided in patent application WO 95/12323, in which a thickened food having improved stability, including a non-pregelatinized amylose polymer containing component and a second biopolymer selected among iota carrageenan, kappa carrageenan, xanthan, maltodextrins, pectins, etc., in which the amylose polymer containing component is present as dispersed phase, is described.

The only biopolymer, amongst those listed in the formulation according to WO 95/12323, that can be considered a non-"artificial" ingredient are maltodextrins. In the patent application in question it is suggested to use maltodextrins in the amount of 8-10% by weight of the final thickened food.

However, the Applicant has experimentally demonstrated that a native starch-based thickened food composition containing 8-10% maltodextrins and prepared according to the method taught in the aforementioned patent application does not exhibit rheological characteristics comparable to those of a home-made béchamel type base, nor does it have entirely satisfactory stability characteristics. This is especially the case when the composition contains a certain percentage of edible fat, required to obtain organoleptic qualities comparable to those of home-made bases.

The problem forming the basis of the present invention was therefore that of providing a thickened food composition that could be used as a base for the preparation of so-called "white" sauces, which contained no "artificial" ingredient, while still possessing rheological and organoleptic characteristics comparable to home-made béchamel type bases and good stability over the entire shelf-life at room temperature.

### Summary of the invention

Such a problem has been solved, according to the invention, by a native starch-based thickened food composition, containing, in percentage weight of the weight of the composition, 0 to 7% maltodextrins, 0 to 3% one or more dietary fibers, at least 4% edible fats and at least 0.5% milk proteins, the overall percentage content of said maltodextrins and said dietary fibers being at least 1%.

The milk proteins are preferably contained in the amount of 0.5-4.0% and sodium or potassium caseinates are preferably used as milk proteins.

The native starch preferably constitutes between 1.5 and 7% by weight of the composition and is preferably a native non-chemically modified waxy corn starch.

Such a starch is characterized by a viscosity, in a 5% aqueous dispersion, at pH between 3 and 7, of between 200 and 700 Brabender units at a temperature of between 70 and 92°C.

The maltodextrins are preferably contained in the amount of 1-6% and, preferably, maltodextrins characterized by high temperature solubility of up to 40% are used, which, when dispersed in water in a ratio of between 1:5 and 2:5 and dissolved by heating to 75°C, exhibit, after cooling to 20°C, a Casson viscosity of between 800 and 2000 mPa·s and a shear stress of between 10 and 50Pa.

The present composition may also contain rice flour in an amount comprised between 0.3 and 3.0%, replacing a corresponding amount of the aforementioned native starch.

Another ingredient that can optionally be contained in the composition according to the invention is one or more dietary fibers. These are preferably insoluble vegetable fibers, for example oat, wheat, bamboo fibers, etc.

Other optional ingredients of the food composition according to the invention are selected among the group comprising: fresh or powdered milk, ricotta, cream, salt.

The thickened food composition according to the present invention is prepared through a process, also object of the present invention, which, when the composition does not comprise maltodextrins, comprises the steps of:
a) uniformly dispersing the native starch, the milk proteins, the dietary fibers and other possible ingredients in cold water, with stirring;
b) heating up to 40-60°C;
c) homogenizing at a pressure of 150-300 bar;
d) dispensing the thickened food composition thus obtained in suitable airtight containers and sterilizing by autoclave.

When, on the other hand, the food composition according to the invention comprises maltodextrins, the process includes the following steps:
a) uniformly dispersing the maltodextrins in cold water in a 1:4 - 1:6 weight ratio;
b) adding the native starch, the milk proteins and other possible ingredients to the aqueous dispersion thus obtained, with stirring;
c) adding the remaining water and heating up to 40-60°C;
d) homogenizing at a pressure of 150-300 bar;
e) dispensing the thickened food composition thus obtained in suitable airtight containers and sterilizing by autoclave.

Sterilization is preferably carried out at a temperature of 115-130°C.

Advantageously, the process according to the present invention comprises the further step of preparing, with vigorous stirring, a dispersion of rice flour in water, in a 1:4 - 1:10 weight ratio by heating to a temperature of about 80°C until complete gelatinization of the rice flour starch is achieved, and of adding the dispersion thus obtained to the aqueous dispersion prior to the heating to 40-60° step.

The addition of rice flour enables to achieve a final food composition having a whiter color and improved taste, presumably thanks to an inhibiting effect towards the Maillard reaction.

We believe that the synergistic action of the maltodextrins and/or of the fibers with the milk proteins is responsible for the stabilization of the rheological and textural properties of the composition according to the invention, which is comparable to that which is conventionally obtained through the use of xanthans or similar polysaccharide gums and mono- and diglycerides of edible fatty acids or similar emulsifiers.

In particular, we have noticed the absence of synaeresis effects or, in any case, of phase separation in food compositions according to the invention during a four-month shelf-life at room temperature.

### Detailed description of the invention

The present invention will be further described with reference to some embodiment examples provided hereafter for illustrative and not limiting purposes.

### EXAMPLE 1

| | |
|---|---|
| Waxy corn starch | 2.5% |
| Maltodextrins | 2.0% |
| Sodium caseinate | 0.7% |
| Bamboo fiber | 1.5% |
| Rice flour | 1.5% |
| Ricotta | 5.0% |
| Butter | 4.0% |
| Salt | 0.3% |
| Water | q.s. to 100% |

The maltodextrins (Crystal Tex 644® National Starch tapioca dextrin) were dispersed in water, with stirring, at about 15°C in a 1:5 weight ratio until a homogeneous dispersion was obtained.

The waxy corn starch (Novation 2600® National Starch), the sodium caseinate and the powdered bamboo fiber were dry-mixed and then added, with stirring, to the above aqueous dispersion.

The rice flour was dispersed into seven parts by weight of water at a temperature of 80°C inside a mixer, with vigorous stirring, until complete starch gelatinization was obtained (about 10 minutes) and the dispersion thus obtained was added to the aqueous dispersion of maltodextrins, starch, caseinate and dietary fiber.

Then, the ricotta, the butter and the remaining water were added and it was heated, with stirring, up to 60°C, prior to transferring it all into a high pressure homogenizer.

Homogenization was carried out at a pressure of 150 bar, thus obtaining a thick, white and creamy composition, to which salt was added and which was uniformly mixed and heated to 80°C, prior to being dispensed into 200 ml glass containers.

The containers were then sterilized in a rotary autoclave at 121°C for about 9 minutes, so as to reach a minimum final F₀ of 9.

### EXAMPLE 2

| | |
|---|---|
| Waxy corn starch | 1.0% |
| Maltodextrins | 5.0% |
| Sodium caseinate | 2.0% |
| Rice flour | 3.0% |
| Extra-virgin olive oil | 4.0% |
| Salt | 0.3% |
| Water | q.s. to 100% |

The maltodextrins (Crystal Tex 644® National Starch tapioca dextrin) were dispersed in water, with stirring, at about 15°C in a 1:5 weight ratio until a homogeneous dispersion was obtained.

The waxy corn starch (Novation 2600® National Starch) and the sodium caseinate were dry-mixed and then added, with stirring, to the above aqueous dispersion.

The rice flour was dispersed into six parts by weight of water at a temperature of 80°C inside a mixer, with vigorous stirring, until complete starch gelatinization was obtained (about 10 minutes) and the dispersion thus obtained was added to the aqueous dispersion of maltodextrin, starch and caseinate.

Then, the oil and the remaining water were added and it was heated, with stirring, up to 55°C, prior to transferring it all into a high-pressure homogenizer.

Homogenization was carried out at a pressure of 200 bar, thus obtaining a thick, white and creamy composition, to which salt was added and which was uniformly mixed and heated to 80°C, prior to being dispensed into 200 ml glass containers.

The containers were then sterilized in a rotary autoclave at 121°C for about 9 minutes, so as to reach a minimum final F₀ of 9.

### EXAMPLE 3

| | |
|---|---|
| Waxy corn starch | 4.0% |
| Sodium caseinate | 1.5% |
| Bamboo fiber | 2.5% |
| Ricotta | 3.0% |
| Butter | 5.0% |
| Salt | 0.3% |
| Water | q.s. to 100% |

The waxy corn starch (Novation 2600® National Starch), the sodium caseinate and the powdered bamboo fiber were dry-mixed and then added, with stirring, to the cold water (about 15°C), so as to obtain a uniform dispersion.

The rice flour was dispersed into seven parts by weight of water at a temperature of 80°C inside a mixer, with vigorous stirring, until complete starch gelatinization was obtained (about 10 minutes) and the dispersion thus obtained was added to the aqueous dispersion of starch, caseinate and dietary fiber.

Then, the ricotta and the butter were added and it was heated, with stirring, up to 58°C, prior to transferring it all into a high pressure homogenizer.

Homogenization was carried out at a pressure of 170 bar, thus obtaining a thick, white and creamy composition, to which salt was added and which was uniformly mixed and heated to 80°C, prior to being dispensed into 200 ml glass containers.

The containers were then sterilized in a rotary autoclave at 121°C for about 9 minutes, so as to reach a minimum final F₀ of 9.

## Claims

1. Native starch-based thickened food composition, suitable to be used as a base for the preparation of sauces, containing, in percentage weight over the weight of the composition, 0 to 7% maltodextrins, 0 to 3% one or more dietary fibers, at least 4% edible fats and at least 0.5% milk proteins, the overall percentage content of said maltodextrins and said dietary fibers being at least equal to 1%.

2. Composition according to claim 1, wherein the maltodextrins are contained in the amount of 1-6%.

3. Composition according to claim 2, wherein the dietary fibers are contained in the amount of 0.5-3%.

4. Composition according to any one of the previous claims, wherein the native starch constitutes between 1.5 and 7% by weight of the total weight of the composition.

5. Composition according to any one of the previous claims, wherein the milk proteins are contained in the amount of 0.5-4.0% and are selected among sodium and potassium caseinates.

6. Composition according to any one of the previous claims, wherein the native starch is a non-chemically modified native waxy corn starch.

7. Composition according to claim 6, wherein said non-chemically modified native waxy corn starch is **characterized by** a viscosity in a 5% aqueous dispersion, at pH between 3 and 7, of between 200 and 700 Brabender units at a temperature of between 70 and 92°C.

8. Composition according to any one of the previous claims, wherein the maltodextrins used, **characterized by** high temperature solubility of up to 40%, when dispersed in water in a ratio of between 1:5 and 2:5 and dissolved by heating to 75°C, exhibit, after cooling to 20°C, a Casson viscosity of between 800 and 2000 mPa·s and a shear stress of between 10 and 50Pa.

9. Composition according to any one of the previous claims, further containing rice flour in an amount of between 0.3 and 3.0% of the total weight of the composition, replacing a corresponding amount of said native starch.

10. Composition according to any one of the previous claims, wherein said dietary fibers are insoluble vegetable fibers, in particular selected among the group comprising oat, wheat and bamboo fibers.

11. Composition according to any one of the previous claims, further containing one or more ingredients selected among the group comprising fresh or powdered milk, ricotta, cream, salt.

12. Process for the preparation of a thickened food composition according to claim 1, free of maltodextrins, comprising the steps of:
a) mixing the native starch, the milk proteins, the dietary fibers and possible further ingredients in cold water, with stirring;
b) heating said aqueous dispersion up to 40-60°C;
c) homogenizing at a pressure of 150-300 bar;
d) dispensing the thickened food composition thus obtained in suitable airtight containers and sterilizing by autoclave.

13. Process for the preparation of a thickened food composition according to claim 2 or 3, comprising the steps of:
a) uniformly dispersing the maltodextrins in cold water in a 1:4 - 1:6 weight ratio;
b) adding the native starch, the milk proteins and possible further ingredients to the aqueous dispersion thus obtained, with stirring;
c) adding the remaining water and heating up to 40-60°C;
d) homogenizing at a pressure of 150-300 bar;
e) dispensing the thickened food composition thus obtained in suitable airtight containers and sterilizing by autoclave.

14. Process according to claim 12 or 13, wherein the sterilization is carried out at a temperature of 115-130°C.

15. Process according to any one of claims 12-14, comprising the further step of preparing, with vigorous stirring, a dispersion of rice flour in water, in a 1:4 - 1:10 weight ratio, heating to a temperature of about 80°C until complete gelatinization of the rice flour starch, and adding the dispersion thus obtained to said aqueous dispersion prior to said heating to 40-60° step.
